# EUROPEAN PATENT SPECIFICATION

(11) **EP 3 923 228 B1**
(45) Date of publication and mention of the grant of the patent: **16.08.2023**
(21) Application number: 21175234.0
(22) Date of filing: 21.05.2021
(51) Int. Cl.: G06Q 30/0201, G06F 17/18

(54) **DATA ANALYSIS METHOD, DEVICE AND PROGRAM**
VERFAHREN, VORRICHTUNG UND PROGRAMM ZUR DATENANALYSE
PROCÉDÉ, DISPOSITIF ET PROGRAMME D'ANALYSE DE DONNÉES

(30) Priority: 10.06.2020 JP 2020100693
(43) Date of publication of application: 15.12.2021
(73) Proprietor: FUJITSU LIMITED, Kanagawa 211-8588 (JP)
(72) Inventor: Todoriki, Masaru, Kawasaki-shi, Kanagawa, 211-8588 (JP); Umeda, Yuhei, Kawasaki-shi, Kanagawa, 211-8588 (JP); Kobayashi, Ken, Kawasaki-shi, Kanagawa, 211-8588 (JP); Maruhashi, Koji, Kawasaki-shi, Kanagawa, 211-8588 (JP)
(74) Representative: Hoffmann Eitle

(56) References cited:
- EP-A1- 3 425 561

## Description

### FIELD

The embodiment discussed herein is related to a data analysis method, a data analysis device, and a program.

### BACKGROUND

In the related art, a data analysis by topological data analysis (TDA) is performed on time-series data that change with the passage of time, such as stock prices, to perform a feature extraction of the time-series data.

For this data analysis by TDA, a technique of the related art is known in which the persistent homology is applied to an attractor obtained by using the time-series data to perform the feature extraction of the attractor shape.

EP 3 425 561 A1 discloses a state classifying method including generating an attractor containing a plurality of points that correspond to a plurality of sets of time series data, coordinate values of each of the plurality of points being values corresponding to the sets of time series data; generating Betti number sequence data by applying a persistent homology process on the attractor; and classifying a state that is represented by the plurality of sets of time series data based on the Betti number sequence data.

Related techniques are disclosed in, for example, Japanese Laid-Open Patent Publication No. 2017-097643.

However, in the above-mentioned technique of the related art, since the number of pieces of data included in the time-series data is limited, it may be difficult to clearly extract the features of the attractor shape, which causes a problem that the feature extraction performance deteriorates.

According to one aspect, an object of the present disclosure is to provide a data analysis technique that may extract the features of time-series data with high accuracy.

### SUMMARY

The present invention provides a program, in accordance with claim 1.

The present invention also provides a computer-implemented data analysis method, in accordance with claim 5.

The present invention also provides data analysis device, in accordance with claim 9.

According to an aspect of the embodiment, it is possible to extract the features of time-series data with high accuracy.

### BRIEF DESCRIPTION OF DRAWINGS

FIG. 1 is an explanatory diagram illustrating an embodiment in comparison with a case of the related art;
FIG. 2 is a block diagram illustrating a functional configuration example of a data analysis device according to an embodiment;
FIG. 3 is a flowchart illustrating an operation example of the data analysis device according to the embodiment;
FIG. 4 is an explanatory diagram illustrating an example of determination of interpolation points;
FIG. 5 is an explanatory diagram illustrating an attractor;
FIG. 6 is an explanatory diagram illustrating an analysis example of time-series data including interpolation points of high and low prices;
FIG. 7 is an explanatory diagram illustrating an analysis example of time-series data including interpolation points of opening and closing prices;
FIG. 8 is an explanatory diagram illustrating the conditions for increasing the number of data points;
FIG. 9 is an explanatory diagram illustrating data analysis of time-series data including equally-divided interpolation points of high and low prices;
FIG. 10 is an explanatory diagram illustrating a case where interpolation points are determined by projecting at a break time; and
FIG. 11 is a block diagram illustrating an example of a computer configuration.

### DESCRIPTION OF EMBODIMENT

Hereinafter, an embodiment will be described with reference to the accompanying drawings. The data analysis program, data analysis method, and data analysis device described in the following embodiment are merely examples, and the embodiments are not limited thereto.

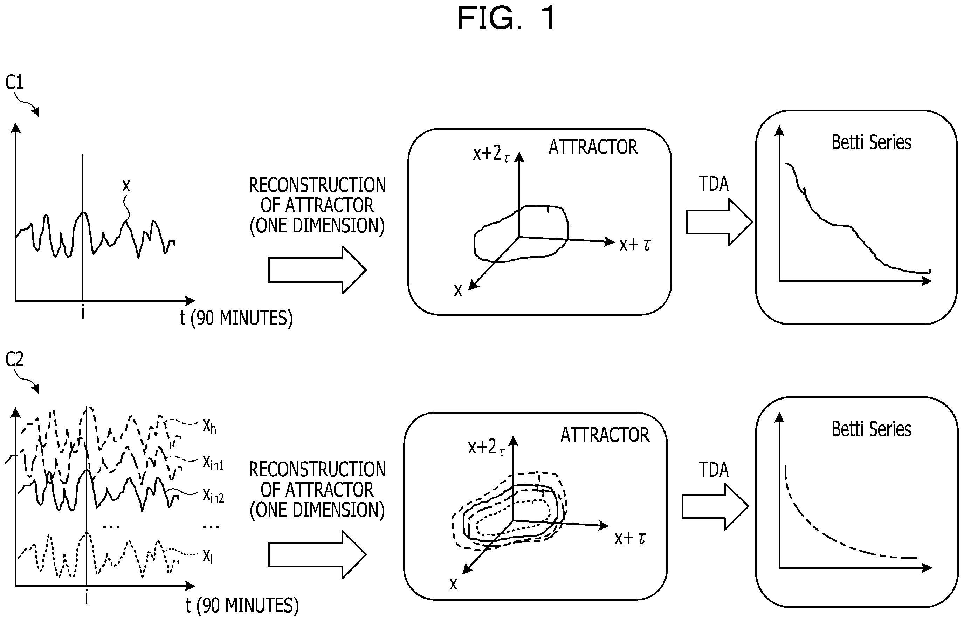

FIG. 1 is an explanatory diagram illustrating an embodiment in comparison with a case of the related art. In FIG. 1, Case C1 is an example of data analysis by the related art, and Case C2 is an example of data analysis in the present embodiment.

As illustrated in FIG. 1, in the data analysis in Cases C1 and C2, a Betti series is obtained (0^{th}-order Betti series in the illustrated example) by applying the persistent homology by data analysis using TDA to an attractor reconstructed (generated) by introducing a characteristic time shift term (τ) into time-series data of a stock price. Next, the feature of the stock price fluctuation is extracted by extracting the feature of the shape of the attractor based on the obtained Betti series.

The time-series data are multi-dimensional data. For example, time-series data of a stock price include four prices (four values): opening price, high price, low price, and closing price. Here, the opening price is the price of a stock traded (contracted) first in a predetermined period (*e.g*., half-day or daily unit). The high price is the highest price of the stock traded in the predetermined period. The low price is the lowest price of the stock traded in the predetermined period. The closing price is the last price of the stock traded in the predetermined period.

For example, the features of time-series data of stock prices often appear in half-day or daily units. Therefore, the closing price data among the four prices of opening price, high price, low price, and closing price is often used for analyzing the time-series data of stock prices.

In Case C1 of the related art, the attractor is reconstructed based only on the closing price in the time-series data of a stock price (x) to obtain the Betti series by TDA for the generated attractor. Therefore, since the number of pieces of data is limited to the closing price, it is difficult to clearly extract the features of the attractor shape. For example, in the Betti series of Case C1, a scale (r) becomes smaller (*i.e.*, sudden descent), and then the change is smooth as a whole. Therefore, it is difficult to clearly extract the features because the features lack the smoothness of change as a whole.

In Case C2 of the present embodiment, for the time-series data, a plurality of numerical values indicating the features at respective timings (time i) having a predetermined time interval (*e.g*., one-minute interval within 90 minutes) is determined so that the number of numerical values is the same, and the attractor is reconstructed based on the determined numerical values. Specifically, the high price and the low price in the time-series data of the stock price and the interpolation points between the prices at each timing are determined by equally dividing, for example, between the high price and the low price.

In this way, the numerical values indicating a plurality of features determined so that the number of numerical values per timing is the same for each timing may be state points on the attractor in a phase space. Therefore, by reconstructing the attractor using these numerical values, the density of the attractor in the phase space increases so that the shape of the attractor is clarified and the Betti series obtained by TDA is stabilized. Specifically, in the Betti series of Case C2, the change is smooth as a whole. Therefore, in Case C2, the features of the time-series data may be accurately extracted based on the Betti series.

In addition, since the opening price and the closing price are included between the high price and the low price, which are examples of the highest point and the lowest point in the time interval corresponding to each timing, it is possible to express the existence range of the attractor on the phase space more widely in the high price and the low price than in the opening price and the closing price. In addition, since the existence range of the attractor on the phase space may be expressed more widely, it is highly possible that a difference in the attractor shape and a difference in the Betti series based on the difference may be clearly distinguished. In that respect, it is considered that the high price and the low price are better than the opening price and the closing price.

Regarding the time-series data to be analyzed, the time-series data indicating the transition of the stock price are discussed as an illustrative example only, but the present disclosure is not limited to the time-series data of the stock price. For example, the time-series data may include biological data (time-series data such as brain wave, pulse, or body temperature) other than heart rate, wearable sensor data (time-series data of a gyro sensor, an acceleration sensor, a geomagnetic sensor, or the like), financial data (time-series data of interest rate, commodity price, international balance, stock price, or the like), natural environment data (time-series data of temperature, humidity, carbon dioxide concentration, or the like), social data (data of labor statistics, population statistics, or the like), etc. In embodiments within the scope of the appended claims, the time-series data comprises wearable sensor data, or natural environment data that indicate temperature, humidity, or carbon dioxide concentration.

For example, in the case of time-series data of an acceleration sensor installed on a bridge, the highest point and the lowest point of acceleration at each timing and the interpolation points between the points are determined to reconstruct an attractor. Next, a Betti series is obtained by TDA for the generated attractor, and a difference in time-series data is detected. As a result, the characteristic state that occurs in response to the deterioration of the strength of the bridge may be detected and the deterioration of the bridge may be detected accordingly.

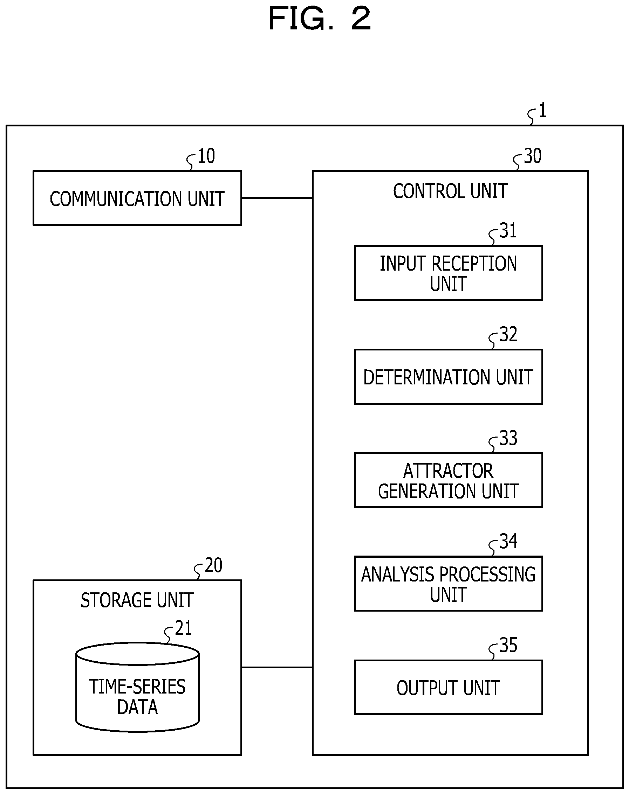

FIG. 2 is a block diagram illustrating a functional configuration example of a data analysis device according to the embodiment. As illustrated in FIG. 2, the data analysis device 1 includes a communication unit 10, a storage unit 20, and a control unit 30.

Under the control of the control unit 30, the communication unit 10 communicates with other devices (e.g., a display device, a server device, etc.) via a communication cable or the like. The communication unit 10 is implemented by, for example, a communication interface connected to a display device, a NIC (network interface card) connected to a communication network such as a LAN (local area network) or the like.

The storage unit 20 corresponds to, for example, a semiconductor memory device such as a RAM (random access memory) or a flash memory, or a storage device such as an HDD (hard disk drive). The storage unit 20 stores time-series data 21 and the like to be analyzed, which are received by an input reception unit 31. In the case of stock prices, the time-series data 21 are, for example, Tick data indicating individual transactions (contract time, stock price, and number of stocks).

The control unit 30 includes the input reception unit 31, a determination unit 32, an attractor generation unit 33, an analysis processing unit 34, and an output unit 35. The control unit 30 may be implemented by a CPU (central processing unit), an MPU (micro processing unit), or the like. The control unit 30 may also be implemented by hard-wired logic such as an ASIC (application specific integrated circuit) or an FPGA (field programmable gate array).

The input reception unit 31 is a processing unit that receives data input. Specifically, the input reception unit 31 receives input of the time-series data 21 to be analyzed by the operation input using a keyboard, a touch panel, or the like, or the file input by communication via the communication unit 10. Next, the input reception unit 31 stores the input time-series data 21 in the storage unit 20.

The determination unit 32 is a processing unit that determines a plurality of numerical values indicating the features at respective timings having a predetermined time interval for the time-series data 21 to be analyzed so that the number of numerical values per timing is the same.

Specifically, the determination unit 32 reads out data having a predetermined time width from the storage unit 20 based on the respective timings having the predetermined time interval for the time-series data 21 to be analyzed, and determines the same number of numerical values indicating the features at each timing. In addition, the time interval for taking timing and the time width for reading data from the time-series data 21 after each timing are set in advance by, for example, a user. As an example, the time interval for taking timing may be one-minute interval. Further, the time width for reading the data may be between the reference timing and the next timing.

Further, the numerical value indicating the feature determined by the determination unit 32 at each timing may be determined by extracting from the data having a predetermined time width after each timing. For example, the determination unit 32 obtains the values of the highest point and the lowest point at each timing. Then, the determination unit 32 obtains the interpolation points between the obtained highest point and lowest point by equally dividing them into the same number, for example, at each timing. The determination unit 32 determines the obtained values of the highest point and the lowest point and the values of the obtained interpolation points between the highest point and the lowest point as the numerical values indicating the features.

The attractor generation unit 33 is a processing unit that generates an attractor from the time-series data 21. Specifically, the attractor generation unit 33 generates virtual time-series data by introducing a characteristic time shift term (τ) every dimension for the plurality of numerical values determined by the determination unit 32 at each timing of the time-series data 21, that is, multi-dimensional time-series data. Then, the attractor generation unit 33 generates an attractor from the generated virtual time-series data. As a method of introducing the characteristic time shift term (τ) from the time-series data, a well-known statistical method used in informatics, such as multi-dimensional autocorrelation coefficient and mutual information amount, may be used.

The analysis processing unit 34 is a processing unit that generates a Betti series by executing a persistent homology conversion on the attractor generated by the attractor generation unit 33. Here, the term "homology" refers to a method of expressing the feature of an object by the number of m (m≥0)-dimensional holes. The term "hole" mentioned herein refers to the origin of a homology group. The 0-dimensional hole is a connecting component, the 1-dimensional hole is a hole (tunnel), and the 2-dimensional hole is a cavity. The number of holes in each dimension is called a Betti number. The phrase "persistent homology" refers to a method of characterizing the transition of m-dimensional holes in an object (here, a set of points (Point Cloud)). The persistent homology may examine the features related to the arrangement of points. In this method, each point in the object gradually inflates into a sphere, in which process the time when each hole appears (represented by the radius of the sphere at the time of appearance) and the time when it disappears (represented by the radius of the sphere at the time of disappearance) are specified (corresponding to the scale (r) described above).

Although the case of generating the 0-dimensional Betti series is illustrated in this embodiment, the analysis processing unit 34 may generate a one-dimensional or two-dimensional Betti series.

The output unit 35 is a processing unit that performs an output process such as a display output to a display device and a file output. Specifically, the output unit 35 outputs, to a user, the analysis results of the Betti series or the like analyzed by the analysis processing unit 34 as the display output to the display device or the file output. In addition, the output unit 35 may output a result obtained by inputting the Betti series analyzed by the analysis processing unit 34, as the feature amount, into a known machine learning model, that is, a classification result by the machine learning model.

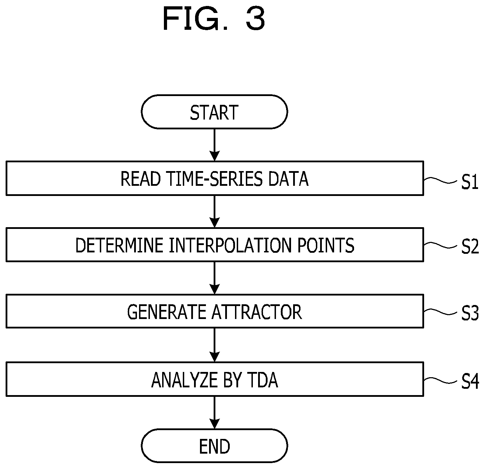

FIG. 3 is a flowchart illustrating an operation example of the data analysis device according to the embodiment. As illustrated in FIG. 3, when a process is started, the determination unit 32 reads out the time-series data 21 corresponding to each timing (*e.g*., one-minute interval) from the storage unit 20 (S1). Based on the read data, the determination unit 32 determines the values of the highest point (high price) and the lowest point (low price) in the time width after each timing, as one of the numerical values indicating the features. Next, the determination unit 32 determines the interpolation points between the highest point and the lowest point at each timing, as one of the numerical values indicating the features (S2).

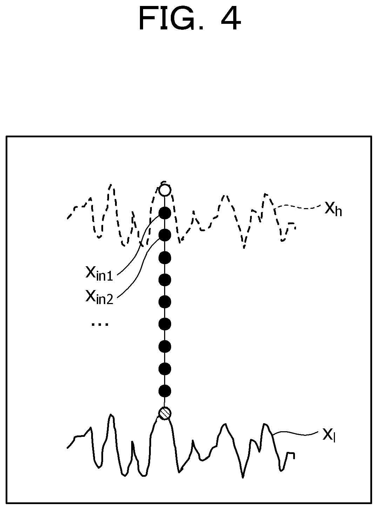

FIG. 4 is an explanatory diagram illustrating an example of determining interpolation points. As illustrated in FIG. 4, the determination unit 32 determines interpolation points (xᵢₙ₁, xᵢₙ₂, ...) between the highest point (xₕ) and the lowest point (x) by equally dividing between the points into the same number at each timing. For example, the determination unit 32 divides between the highest point (xₕ) and the lowest point (xₗ) into 10 equal parts, so that a total of 11 numerical values of the highest point (xₕ), the lowest point (xₗ), and the interpolation points (xᵢₙ₁, xᵢₙ₂, ···) are determined at each timing.

Next, the attractor generation unit 33 generates an attractor regarding the time-series data 21 based on a plurality of numerical values (the highest point (xₕ), the lowest point (xₗ), and the interpolation points (xᵢₙ₁, xᵢₙ₂, ···)) determined by the determination unit 32 at each timing (S3).

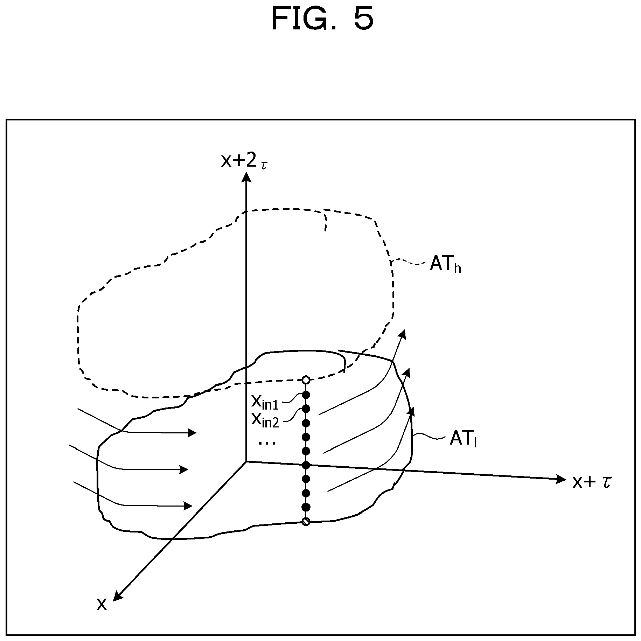

FIG. 5 is an explanatory diagram illustrating the attractor. As illustrated in FIG. 5, the attractor generation unit 33 generates virtual time-series data by introducing a characteristic time shift term (τ) every dimension with each of the plurality of numerical values (the highest point (xₕ), the lowest point (xₗ), and the interpolation points (xᵢₙ₁, xᵢₙ₂, ···)) determined by the determination unit 32, as one dimension. Next, the attractor generation unit 33 generates an attractor for each dimension from the generated virtual time-series data. For example, the attractor generation unit 33 generates an attractor ATₕ corresponding to the highest point (xₕ), an attractor ATₗ corresponding to the lowest point (xₗ), and the like.

Referring back to FIG. 3, next to S3, the analysis processing unit 34 analyzes the time-series data 21 by TDA based on the attractor generated by the attractor generation unit 33 (S4). Specifically, the analysis processing unit 34 executes a persistent homology conversion on the attractor generated by the attractor generation unit 33 to generate a Betti series. Next, the output unit 35 outputs the analysis result of the analysis processing unit 34 and ends the process.

Here, the conditions for increasing the number of pieces of data for attractor generation related to the time-series data 21 will be described. First, in order to reconstruct the attractor in a phase space, the number of data points at each timing is made same. Further, among the feature points included in the time-series data 21 (*e.g.,* the opening price, the high price, the low price, and the closing price in a stock price), a feature point in which a point sequence fluctuates drastically and an attractor may not be stable may not be preferable as an object for increasing the number of data for attractor generation.

For example, the four values (*i.e.*, the opening price, the high price, the low price, and the closing price) in the stock price are only representative points (feature points) at each timing. Therefore, a point sequence connecting the values for each of the four values is not originally data that are connected in time, and therefore has little physical meaning. However, when the attractor is reconstructed, the arrangement of each point on the phase space becomes meaningful, so that a meaningful point sequence data may be selected to use the data effectively.

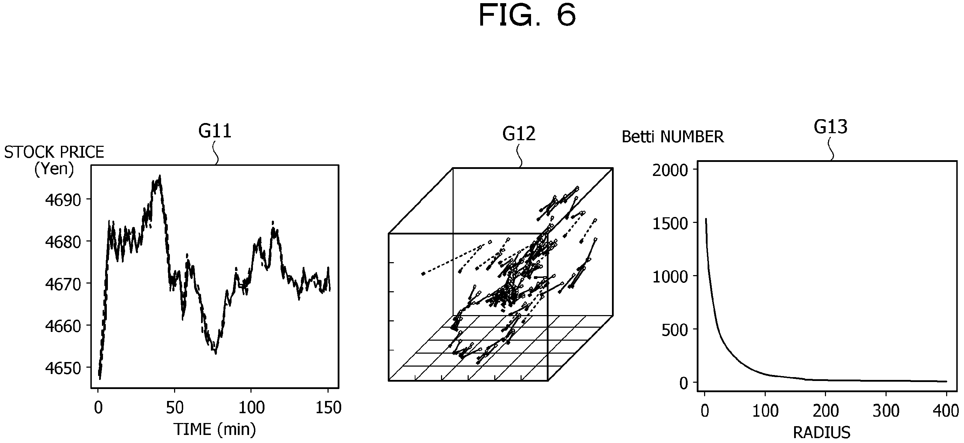

FIG. 6 is an explanatory diagram illustrating an analysis example of the time-series data including the interpolation points of the high and low prices. In FIG. 6, the graph G11 is a graph of the high and low prices and the interpolation points thereof at each timing (*e.g.,* at one-minute interval) in the time-series data 21 of the stock price. The graph G12 is a graph representing an attractor on the phase space generated by the attractor generation unit 33 based on the graph G11. That is, the graph G12 represents the attractor shape for the high and low prices and the interpolation points thereof of the stock price. The graph G13 is a graph representing a Betti series (0-dimension) obtained by the analysis processing unit 34 performing analysis by TDA based on the graph G12.

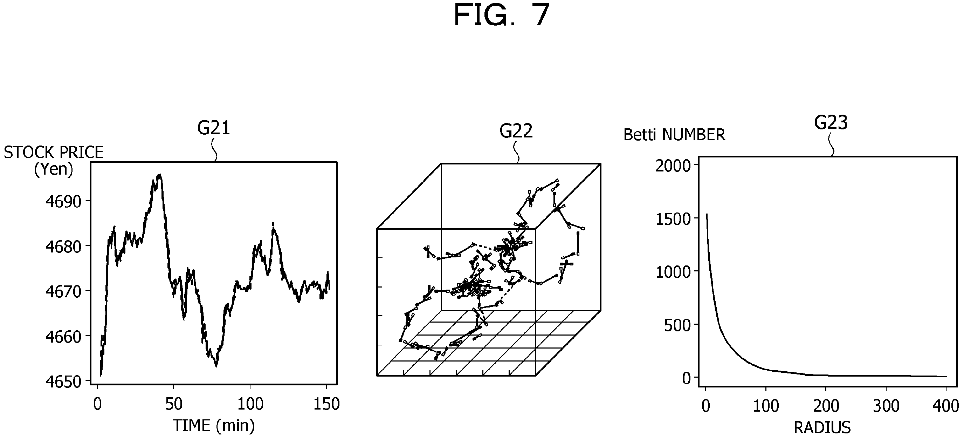

FIG. 7 is an explanatory diagram illustrating an analysis example of the time-series data including the interpolation points of the opening and closing prices. In FIG. 7, the graph G21 is a graph of the opening and closing prices and the interpolation points thereof at each timing (*e.g.,* at one-minute interval) in the time-series data 21 of the stock price. The graph G22 is a graph representing an attractor on the phase space generated by the attractor generation unit 33 based on the graph G21. That is, the graph G12 represents the attractor shape for the opening and closing prices and the interpolation points thereof of the stock price. The graph G23 is a graph representing a Betti series (0-dimension) obtained by the analysis processing unit 34 performing analysis by TDA based on the graph G22.

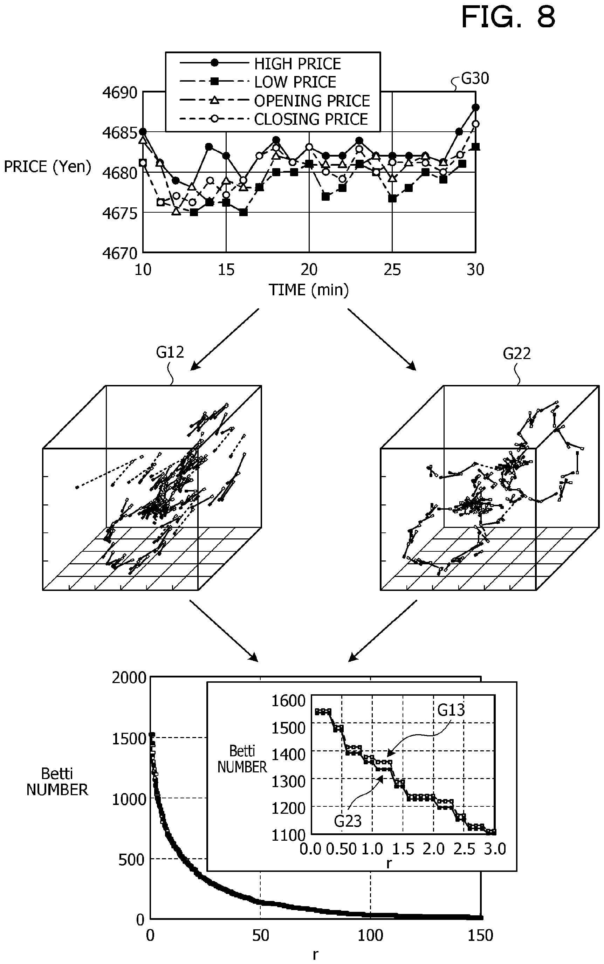

FIG. 8 is an explanatory diagram illustrating the conditions for increasing the data points. The graph G30 in FIG. 8 is a graph representing the transition of the four prices (*i.e.*, opening price, high price, low price, closing price) in the time-series data 21 of the stock price. As represented in the graph G30 of FIG. 8, a point sequence connecting the values for each of the four values is not originally data that are connected in time, and therefore has little physical meaning. In contrast, as represented in the graph G12 representing the attractor shape of the high and low prices and the interpolation points thereof of the stock price and the graph G22 representing the attractor shape of the opening and closing price and the interpolation points thereof of the stock price, when the attractor is reconstructed, the arrangement of each point on the phase space becomes meaningful.

For example, as is clear from the comparison between the graph G12 and the graph G22, the high and low prices and the interpolation points thereof are wider in the track of the attractor. In addition, since the attractors of the high and low prices determine the upper and lower limits, respectively, when the number of data points is increased by the interpolation points, the attractors may be expected to be clarified. In contrast, the shapes of the attractors of the opening and closing prices and the interpolation points thereof are clear at first glance, but the attractors illustrate a distorted shape due to the influence of noise caused by severe fluctuations, and the density of points is sparse as a whole.

Therefore, the distance between the phase points forming the attractor increases at the high and low prices and the interpolation points thereof. Further, in comparison between the graph G13 of the Betti series by the attractors of the high and low prices and the interpolation points thereof and the graph G23 of the Betti series by the attractors of the opening and closing prices and the interpolation points thereof, in the graph G13, the Betti number holds a large value for a particularly small r (scale), expressing the feature more clearly.

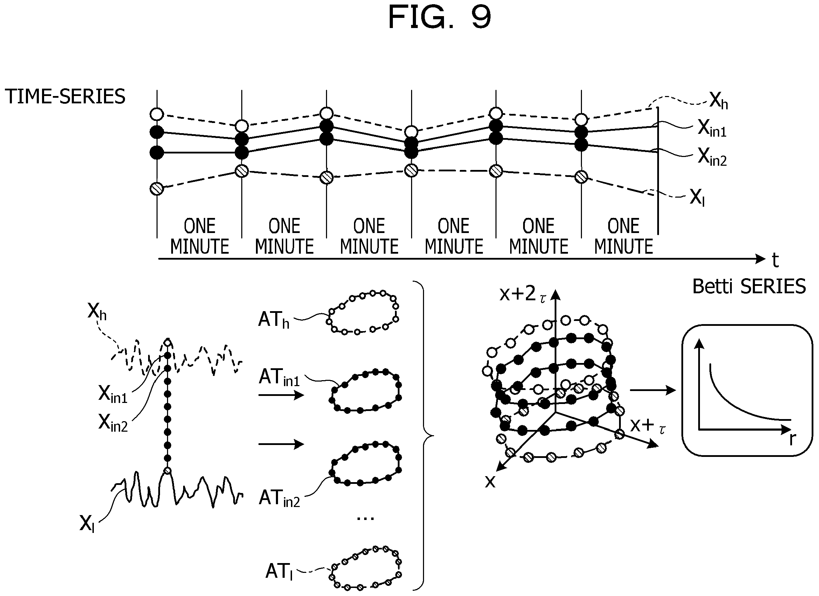

FIG. 9 is an explanatory diagram illustrating the data analysis of the time-series data including equally-divided interpolation points of the high and low prices. As illustrated in FIG. 9, attractors ATₕ, ATini, ATᵢₙ₂, ···, ATₗ reconstructed from the time-series data including the high (xₕ) and low (xₗ) prices of the stock price and the interpolation points (xᵢₙ₁, xᵢₙ₂, ···) that equally divide between the high (xₕ) and low (xₗ) prices are changing smoothly. Therefore, the Betti series generated by the analysis by TDA based on the attractors ATₕ, ATini, ATᵢₙ₂, ···, ATₗ changes smoothly, so that the features may be relatively easily grasped.

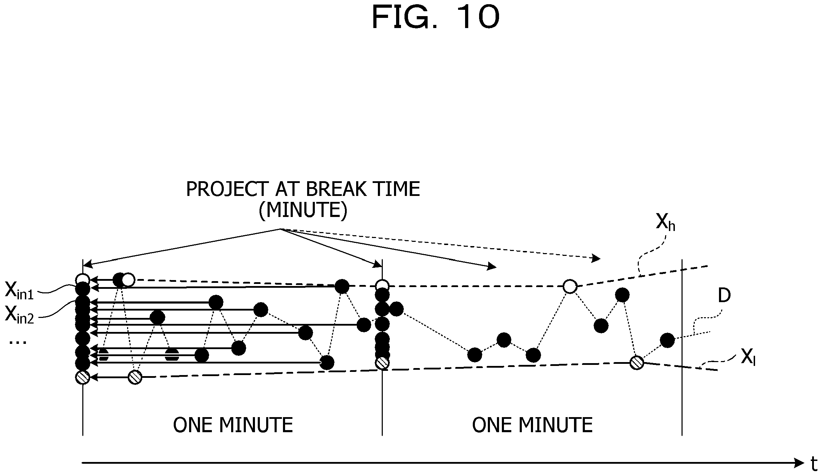

FIG. 10 is an explanatory diagram illustrating a case where interpolation points are determined by projecting at a break time. As illustrated in FIG. 10, the determination unit 32 may determine the measured value (black circle) included in the time-series data 21 (Tick data D) within the time interval corresponding to a timing, as the numerical values of the interpolation points (xᵢₙ₁, xᵢₙ₂, ···).

Specifically, the determination unit 32 determines projection points obtained by projecting the contract prices (black circle) indicated by the tick data D at each timing (break time) at one-minute interval, as the interpolation points. Further, in order to make the number of interpolation points the same at each timing, the determination unit 32 may randomly select when the number of projection points is larger than the number (designated number) determined as the interpolation points. On the contrary, when the number of projection points is less than the designated number, the determination unit 32 may match the designated number to the minimum number of projection points for each timing, or may interpolate to match to the designated number.

As described above, the data analysis device 1 includes the determination unit 32 and the attractor generation unit 33. The determination unit 32 determines the plurality of numerical values indicating the features of the time-series data 21 to be analyzed at respective timings having a predetermined time interval so that the number of numerical values at each timing is made same. The attractor generation unit 33 generates the attractors ATₕ, ATᵢₙ₁, ATᵢₙ₂, ···, ATₗ related to the time-series data 21 based on the numerical values determined by the determination unit 32.

The numerical values indicating a plurality of features determined for the time-series data 21 by aligning the conditions at each timing so that the number of numerical values is the same may be the state points on the attractor in the phase space. Therefore, by generating the attractors ATₕ, ATᵢₙ₁, ATᵢₙ₂, ···, ATₗ based on the numerical values indicating the plurality of determined features, the density of attractors in the phase space may increase, so that the existence range of the attractors on the phase space may be expressed more widely. As a result, the attractor shapes are clarified to distinguish the changes of the attractors clearly, so that the attractors and the Betti series by TDA are stabilized. Further, the Betti series becomes smooth. For this reason, the data analysis device 1 improves the performance of feature extraction in data analysis by TDA, thereby facilitating extraction of the features of the time-series data with high accuracy.

Further, the determination unit 32 determines the numerical values of the highest point (*e.g.,* the high price xₕ) and the lowest point (*e.g.,* the low price xₗ) included in the time-series data 21 within the time interval corresponding to a timing, and the numerical values of the interpolation points (xᵢₙ₁, xᵢₙ₂, ···) with the same number of interpolation points per timing between the highest point and the lowest point.

The interpolation points between the highest point and the lowest point are considered to be points near the phase points that originally exist on the attractor. By determining the interpolation points as numerical values indicating the features, the density of the phase points on the attractor in the phase space increases, thereby expressing the existence range of the attractor in more detail. As a result, the attractor shapes are clarified to easily distinguish a difference between the attractors at the time of data analysis by TDA.

Further, the determination unit 32 determines the numerical values of the interpolation points by equally dividing between the highest point and the lowest point (*e.g*., between the high price and the low price). In this way, the data analysis device 1 may determine the interpolation points by equally dividing between the highest point and the lowest point.

Further, the determination unit 32 determines the measured values (*e.g.,* the contract prices in the stock price) included in the time-series data 21 within the time interval corresponding to a timing, as the numerical values of the interpolation points. The measured values included in the time-series data 21 within the time interval corresponding to the timing may be considered closer to the phase points originally existing on the attractor. Therefore, by determining the measured values as the numerical values of the interpolation points, the attractor shapes are clarified to easily distinguish the difference between the attractors at the time of data analysis by TDA.

Further, the time-series data 21 are data indicating the temporal transition of the stock price. The determination unit 32 determines the high and low prices of the stock price and the numerical values of the interpolation points with the same number of interpolation points per timing between the high and low prices at each timing. The interpolation points between the high and low prices in the stock price correspond to the degree of fluctuation in the stock price. Therefore, by generating attractors using the high and low prices of the stock price and the interpolation points between the prices, since the attractors are considered more accurately reflect the dynamic characteristics of the actual phenomenon in the stock price (transition of the stock price over time), the accuracy of stock price feature extraction may be expected to be increased.

Each constituent element of each of the illustrated devices does not necessarily have to be physically configured as illustrated in the drawings. That is, the specific form of distribution/integration of the devices is not limited to those illustrated in the drawings, and all or a part of the devices may be configured to be functionally or physically distributed/integrated in arbitrary units according to various loads and usage conditions.

Further, all or a part of various types of processing functions performed by the data analysis device 1 may be executed on a CPU (or a microcomputer such as an MPU or an MCU (Micro Controller Unit)). Further, it is needless to say that all or a part of the various types of processing functions may be executed on a program analyzed and executed by a CPU (or a microcomputer such as an MPU or an MCU) or on hardware by wired logic. Further, the various types of processing functions performed by the data analysis device 1 may be executed by a plurality of computers in cooperation by cloud computing.

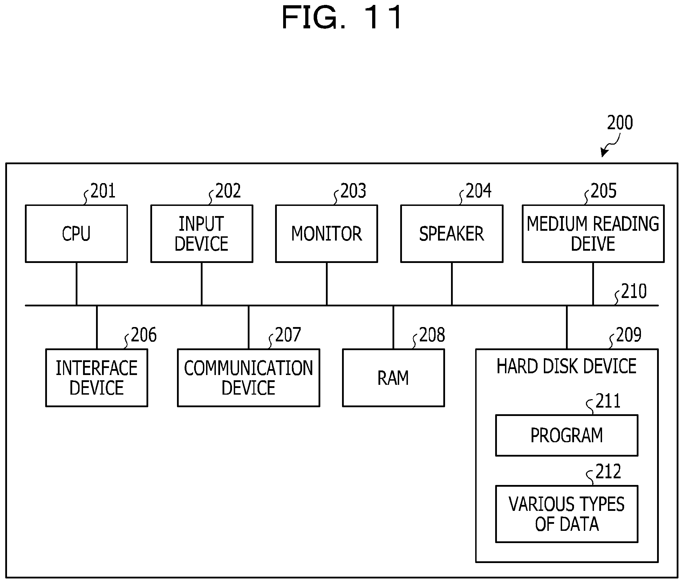

The various types of processes described in the above embodiment may be implemented by executing a program prepared in advance on a computer. Therefore, an example of a computer (hardware) that executes a program having the same function as that of the above embodiment will be described below. FIG. 11 is a block diagram illustrating an example of a computer configuration.

As illustrated in FIG. 11, the computer 200 includes a CPU 201 that executes various types of arithmetic processes, an input device 202 that receives data input, a monitor 203, and a speaker 204. Further, the computer 200 includes a medium reading device 205 that reads a program or the like from a storage medium, an interface device 206 for connecting to various devices, and a communication device 207 for communicating with external devices by wire or wirelessly. Further, the computer 200 includes a RAM 208 for temporarily storing a variety of information, and a hard disk device 209. Further, the parts (201 to 209) in the computer 200 are connected to a bus 210.

The hard disk device 209 stores a program 211 for executing various types of processes in the input reception unit 31, the determination unit 32, the attractor generation unit 33, the analysis processing unit 34, the output unit 35, and the like described in the above embodiment. Further, the hard disk device 209 stores various types of data 212 referred to by the program 211. The input device 202 receives, for example, input of operation information from an operator. The monitor 203 displays, for example, various types of screens operated by the operator. The interface device 206 is connected to, for example, a printing device or the like. The communication device 207 is connected to a communication network such as a LAN (Local Area Network) to exchange a variety of information with external devices via the communication network.

The CPU 201 reads the program 211 stored in the hard disk device 209 and deploys the read program 211 onto the RAM 208 to perform various types of processes related to the input reception unit 31, the determination unit 32, the attractor generation unit 33, the analysis processing unit 34, the output unit 35, and the like. The program 211 may not be stored in the hard disk device 209. For example, the computer 200 may read and execute the program 211 stored in a readable storage medium. The storage medium that may be read by the computer 200 includes a portable recording medium such as a CD-ROM, a DVD disk, or a USB (universal serial bus) memory, a semiconductor memory such as a flash memory, a hard disk drive, or the like. Further, the program 211 may be stored in a device connected to a public line, the Internet, a LAN, or the like, and the computer 200 may read and execute the program 211 from this device.

## Claims

1. A program that causes a computer to execute a process, the process comprising:
reading (S1) out time-series data (21) to be analyzed from a storage unit (20), the time-series data comprising wearable sensor data, or natural environment data that indicate temperature, humidity, or carbon dioxide concentration;
**characterised by**
determining numerical values indicating features at respective timings having a predetermined time interval with respect to the time-series data (21) by determining (S2), for each time interval between the respective timings, numerical values of a highest point and a lowest point included in the time-series data (21) within that time interval and numerical values of interpolation points between the highest point and the lowest point, wherein a same number of the interpolation points is determined in respect of each time interval;
generating (S3) an attractor related to the time-series data (21) based on the determined numerical values; and
analyzing (S4) the time-series data (21) by topological data analysis based on the generated attractor.

2. The program according to claim 1, the process further comprising: determining the numerical values of the interpolation points by equally dividing between the highest point and the lowest point.

3. The program according to claim 1, the process further comprising:
determining measured values included in the time-series data (21) within the time intervals corresponding to the respective timings, as the numerical values of the interpolation points.

4. The program according to claim 1, wherein
the wearable sensor data comprises time-series data of a gyro sensor, an acceleration sensor, or a geomagnetic sensor.

5. A computer-implemented data analysis method, comprising:
reading (S1) out time-series data (21) to be analyzed from a storage unit (20), the time-series data comprising wearable sensor data, or natural environment data that indicate temperature, humidity, or carbon dioxide concentration;
**characterised by**
determining, by a computer, numerical values indicating features at respective timings having a predetermined time interval with respect to the time-series data (21) by determining (S2), for each time interval between the respective timings, numerical values of a highest point and a lowest point included in the time-series data (21) within that time interval and numerical values of interpolation points between the highest point and the lowest point, wherein a same number of the interpolation points is determined in respect of each time interval;
generating (S3) an attractor related to the time-series data (21) based on the determined numerical values; and
analyzing (S4) the time-series data (21) by topological data analysis based on the generated attractor.

6. The data analysis method according to claim 5, further comprising:
determining the numerical values of the interpolation points by equally dividing between the highest point and the lowest point.

7. The data analysis method according to claim 5, further comprising:
determining measured values included in the time-series data (21) within the time intervals corresponding to the respective timings, as the numerical values of the interpolation points.

8. The data analysis method according to claim 5, wherein
the wearable sensor data comprises time-series data of a gyro sensor, an acceleration sensor, or a geomagnetic sensor.

9. A data analysis device (1), comprising:
a determination unit (32) configured to read out time-series data (21) to be analyzed from a storage unit (20), the time-series data comprising wearable sensor data, or natural environment data that indicate temperature, humidity, or carbon dioxide concentration,
the device (1) being **characterised in that** the determination unit (32) is configured to determine numerical values indicating features at respective timings having a predetermined time interval with respect to the time-series data (21) by determining, for each time interval between the respective timings, numerical values of a highest point and a lowest point included in the time-series data (21) within that time interval and numerical values of interpolation points between the highest point and the lowest point, wherein a same number of the interpolation points is determined in respect of each time interval;
a generation unit (33) configured to generate an attractor related to the time-series data (21) based on the determined numerical values; and
an analysis processing unit (34) configured to analyze the time-series data (21) by topological data analysis based on the generated attractor.

10. The data analysis device (1) according to claim 9, wherein
the determination unit (32) is further configured to determine the numerical values of the interpolation points by equally dividing between the highest point and the lowest point.

11. The data analysis device (1) according to claim 9, wherein
the determination unit (32) is further configured to determine measured values included in the time-series data (21) within the time intervals corresponding to the respective timings, as the numerical values of the interpolation points.

12. The data analysis device (1) according to claim 9, wherein
the wearable sensor data comprises time-series data of a gyro sensor, an acceleration sensor, or a geomagnetic sensor.

## Patentansprüche

1. Programm, das einen Computer veranlasst, einen Prozess auszuführen, wobei der Prozess umfasst:
Auslesen (S1) von zu analysierenden Zeitreihendaten (21) aus einer Speichereinheit (20), wobei die Zeitreihendaten Daten eines tragbaren Sensors oder Daten der natürlichen Umgebung umfassen, die Temperatur, Feuchtigkeit oder Kohlendioxidkonzentration angeben;
**gekennzeichnet durch**
Bestimmen von numerischen Werten, die Merkmale zu jeweiligen Zeitpunkten angeben, die ein vorbestimmtes Zeitintervall in Bezug auf die Zeitreihendaten (21) aufweisen, durch Bestimmen (S2), für jedes Zeitintervall zwischen den jeweiligen Zeitpunkten, von numerischen Werten eines höchsten Punktes und eines niedrigsten Punktes, die in den Zeitreihendaten (21) innerhalb dieses Zeitintervalls enthalten sind, und von numerischen Werten von Interpolationspunkten zwischen dem höchsten Punkt und dem niedrigsten Punkt, wobei eine gleiche Anzahl der Interpolationspunkte in Bezug auf jedes Zeitintervall bestimmt wird;
Erzeugen (S3) eines Attraktors, der sich auf die Zeitreihendaten (21) bezieht, basierend auf den bestimmten numerischen Werten; und
Analysieren (S4) der Zeitreihendaten (21) durch topologische Datenanalyse basierend auf dem erzeugten Attraktor.

2. Programm nach Anspruch 1, wobei das Verfahren weiter umfasst:
Bestimmen der numerischen Werte der Interpolationspunkte durch gleichmäßiges Unterteilen zwischen dem höchsten Punkt und dem niedrigsten Punkt.

3. Programm nach Anspruch 1, wobei das Verfahren weiter umfasst:
Bestimmen von Messwerten, die in den Zeitreihendaten (21) innerhalb der den jeweiligen Zeitpunkten entsprechenden Zeitintervalle enthalten sind, als die numerischen Werte der Interpolationspunkte.

4. Programm nach Anspruch 1, wobei
die Daten eines tragbaren Sensors Zeitreihendaten eines Gyrosensors, eines Beschleunigungssensors oder eines geomagnetischen Sensors umfassen.

5. Computerimplementiertes Datenanalyseverfahren, umfassend:
Auslesen (S1) von zu analysierenden Zeitreihendaten (21) aus einer Speichereinheit (20), wobei die Zeitreihendaten Daten eines tragbaren Sensors oder Daten der natürlichen Umgebung umfassen, die Temperatur, Feuchtigkeit oder Kohlendioxidkonzentration angeben;
**gekennzeichnet durch**
Bestimmen von numerischen Werten durch einen Computer, die Merkmale zu jeweiligen Zeitpunkten angeben, die ein vorbestimmtes Zeitintervall in Bezug auf die Zeitreihendaten (21) aufweisen, durch Bestimmen (S2), für jedes Zeitintervall zwischen den jeweiligen Zeitpunkten, von numerischen Werten eines höchsten Punktes und eines niedrigsten Punktes, die in den Zeitreihendaten (21) innerhalb dieses Zeitintervalls enthalten sind, und von numerischen Werten von Interpolationspunkten zwischen dem höchsten Punkt und dem niedrigsten Punkt, wobei eine gleiche Anzahl der Interpolationspunkte in Bezug auf jedes Zeitintervall bestimmt wird;
Erzeugen (S3) eines Attraktors, der sich auf die Zeitreihendaten (21) bezieht, basierend auf den bestimmten numerischen Werten; und
Analysieren (S4) der Zeitreihendaten (21) durch topologische Datenanalyse basierend auf dem erzeugten Attraktor.

6. Datenanalyseverfahren nach Anspruch 5, das weiter umfasst:
Bestimmen der numerischen Werte der Interpolationspunkte durch gleichmäßiges Unterteilen zwischen dem höchsten Punkt und dem niedrigsten Punkt.

7. Datenanalyseverfahren nach Anspruch 5, das weiter umfasst:
Bestimmen von Messwerten, die in den Zeitreihendaten (21) innerhalb der den jeweiligen Zeitpunkten entsprechenden Zeitintervalle enthalten sind, als die numerischen Werte der Interpolationspunkte.

8. Datenanalyseverfahren nach Anspruch 5, wobei
die Daten eines tragbaren Sensors Zeitreihendaten eines Gyrosensors, eines Beschleunigungssensors oder eines geomagnetischen Sensors umfassen.

9. Datenanalysevorrichtung (1), umfassend:
eine Bestimmungseinheit (32), die konfiguriert ist zum Auslesen zu analysierender Zeitreihendaten (21) aus einer Speichereinheit (20), wobei die Zeitreihendaten Daten eines tragbaren Sensors oder Daten der natürlichen Umgebung umfassen, die Temperatur, Feuchtigkeit oder Kohlendioxidkonzentration angeben,
wobei die Vorrichtung (1) **dadurch gekennzeichnet ist, dass** die Bestimmungseinheit (32) konfiguriert ist zum Bestimmen von numerischen Werten, die Merkmale zu jeweiligen Zeitpunkten mit einem vorbestimmten Zeitintervall in Bezug auf die Zeitreihendaten (21) angeben, indem für jedes Zeitintervall zwischen den jeweiligen Zeitpunkten numerische Werte eines höchsten Punktes und eines niedrigsten Punktes, die in den Zeitreihendaten (21) innerhalb dieses Zeitintervalls enthalten sind, und numerische Werte von Interpolationspunkten zwischen dem höchsten Punkt und dem niedrigsten Punkt bestimmt werden, wobei eine gleiche Anzahl der Interpolationspunkte in Bezug auf jedes Zeitintervall bestimmt wird;
eine Erzeugungseinheit (33), die konfiguriert ist zum Erzeugen eines Attraktors in Bezug auf die Zeitreihendaten (21) basierend auf den bestimmten numerischen Werten; und
eine Analyseverarbeitungseinheit (34), die konfiguriert ist zum Analysieren der Zeitreihendaten (21) durch topologische Datenanalyse basierend auf dem erzeugten Attraktor.

10. Datenanalysevorrichtung (1) nach Anspruch 9, wobei
die Bestimmungseinheit (32) weiter konfiguriert ist zum Bestimmen der numerischen Werte der Interpolationspunkte durch gleichmäßiges Unterteilen zwischen dem höchsten Punkt und dem niedrigsten Punkt.

11. Datenanalysevorrichtung (1) nach Anspruch 9, wobei
die Bestimmungseinheit (32) weiter konfiguriert ist zum Bestimmen in den Zeitreihendaten (21) enthaltener Messwerte innerhalb der den jeweiligen Zeitpunkten entsprechenden Zeitintervalle als die numerischen Werte der Interpolationspunkte.

12. Datenanalysevorrichtung (1) nach Anspruch 9, wobei
die Daten eines tragbaren Sensors Zeitreihendaten eines Gyrosensors, eines Beschleunigungssensors oder eines geomagnetischen Sensors umfassen.

## Revendications

1. Programme qui amène un ordinateur à mettre en oeuvre un processus, le processus comprenant :
la lecture (S1) de données chronologiques (21) à analyser depuis une unité (20) de stockage, les données chronologiques comprenant des données d'un capteur apte à être porté, ou des données d'environnement naturel qui indiquent la température, l'humidité ou la concentration en dioxyde de carbone ;
**caractérisé par**
la détermination de valeurs numériques indiquant des caractéristiques à des moments respectifs présentant un intervalle de temps prédéterminé par rapport aux données chronologiques (21) par la détermination (S2), pour chaque intervalle de temps entre les moments respectifs, de valeurs numériques d'un point le plus élevé et d'un point le plus bas inclus dans les données chronologiques (21) au sein de cet intervalle de temps et de valeurs numériques de points d'interpolation entre le point le plus élevé et le point le plus bas, dans lequel un même nombre des points d'interpolation est déterminé par rapport à chaque intervalle de temps ;
la génération (S3) d'un attracteur lié aux données chronologiques (21) sur la base des valeurs numériques déterminées ; et
l'analyse (S4) des données chronologiques (21) par une analyse topologique de données sur la base de l'attracteur généré.

2. Programme selon la revendication 1, le processus comprenant en outre :
la détermination des valeurs numériques des points d'interpolation par une division égale entre le point le plus élevé et le point le plus bas.

3. Programme selon la revendication 1, le processus comprenant en outre :
la détermination de valeurs mesurées incluses dans les données chronologiques (21) au sein des intervalles de temps correspondant aux moments respectifs, en tant que valeurs numériques des points d'interpolation.

4. Programme selon la revendication 1, dans lequel
les données de capteur pouvant être porté comprennent des données chronologiques d'un capteur gyroscopique, d'un capteur d'accélération ou d'un capteur géomagnétique.

5. Procédé d'analyse de données mis en oeuvre par ordinateur, comprenant :
la lecture (S1) de données chronologiques (21) à analyser depuis une unité (20) de stockage, les données chronologiques comprenant des données d'un capteur apte à être porté, ou des données d'environnement naturel qui indiquent la température, l'humidité ou la concentration en dioxyde de carbone ;
**caractérisé par**
la détermination, par un ordinateur, de valeurs numériques indiquant des caractéristiques à des moments respectifs présentant un intervalle de temps prédéterminé par rapport aux données chronologiques (21) par la détermination (S2), pour chaque intervalle de temps entre les moments respectifs, de valeurs numériques d'un point le plus élevé et d'un point le plus bas inclus dans les données chronologiques (21) au sein de cet intervalle de temps et de valeurs numériques de points d'interpolation entre le point le plus élevé et le point le plus bas, dans lequel un même nombre des points d'interpolation est déterminé par rapport à chaque intervalle de temps ;
la génération (S3) d'un attracteur lié aux données chronologiques (21) sur la base des valeurs numériques déterminées ; et
l'analyse (S4) des données chronologiques (21) par une analyse topologique de données sur la base de l'attracteur généré.

6. Procédé d'analyse de données selon la revendication 5, comprenant en outre :
la détermination des valeurs numériques des points d'interpolation par une division égale entre le point le plus élevé et le point le plus bas.

7. Procédé d'analyse de données selon la revendication 5, comprenant en outre :
la détermination de valeurs mesurées incluses dans les données chronologiques (21) au sein des intervalles de temps correspondant aux moments respectifs, en tant que valeurs numériques des points d'interpolation.

8. Procédé d'analyse de données selon la revendication 5, dans lequel
les données de capteur pouvant être porté comprennent des données chronologiques d'un capteur gyroscopique, d'un capteur d'accélération ou d'un capteur géomagnétique.

9. Dispositif (1) d'analyse de données, comprenant :
une unité 32) de détermination configurée pour lire des données chronologiques (21) à analyser depuis une unité (20) de stockage, les données chronologiques comprenant des données d'un capteur apte à être porté, ou des données d'environnement naturel qui indiquent la température, l'humidité ou la concentration en dioxyde de carbone,
le dispositif (1) étant **caractérisé en ce que** l'unité (32) de détermination est configurée pour déterminer des valeurs numériques indiquant des caractéristiques à des moments respectifs présentant un intervalle de temps prédéterminé par rapport aux données chronologiques (21) par la détermination, pour chaque intervalle de temps entre les moments respectifs, de valeurs numériques d'un point le plus élevé et d'un point le plus bas inclus dans les données chronologiques (21) au sein de cet intervalle de temps et de valeurs numériques de points d'interpolation entre le point le plus élevé et le point le plus bas, dans lequel un même nombre des points d'interpolation est déterminé par rapport à chaque intervalle de temps ;
une unité (33) de génération configurée pour générer un attracteur lié aux données chronologiques (21) sur la base des valeurs numériques déterminées ; et
une unité (34) de traitement d'analyse configurée pour analyser les données chronologiques (21) par une analyse topologique de données sur la base de l'attracteur généré.

10. Dispositif (1) d'analyse de données selon la revendication 9, dans lequel
l'unité (32) de détermination est en outre configurée pour déterminer les valeurs numériques des points d'interpolation par une division égale entre le point le plus élevé et le point le plus bas.

11. Dispositif (1) d'analyse de données selon la revendication 9, dans lequel
l'unité (32) de détermination est en outre configurée pour déterminer des valeurs mesurées incluses dans les données chronologiques (21) au sein des intervalles de temps correspondant aux moments respectifs, en tant que valeurs numériques des points d'interpolation.

12. Dispositif (1) d'analyse de données selon la revendication 9, dans lequel
les données de capteur pouvant être porté comprennent des données chronologiques d'un capteur gyroscopique, d'un capteur d'accélération ou d'un capteur géomagnétique.
